(19)

**Europäisches Patentamt**
**European Patent Office**
**Office européen des brevets**

(11) **EP 4 404 096 A1**

(12) **EUROPEAN PATENT APPLICATION**

(43) Date of publication:
**24.07.2024  Bulletin 2024/30**

(51) International Patent Classification (IPC):
**G06F 30/20** $^{(2020.01)}$    **G05B 17/00** $^{(2006.01)}$
**G06F 111/10** $^{(2020.01)}$

(21) Application number: **23151990.1**

(22) Date of filing: **17.01.2023**

(52) Cooperative Patent Classification (CPC):
**G06F 30/20;** G06F 2111/08; G06F 2111/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Vrije Universiteit Brussel**
**1050 Brussel (BE)**

(72) Inventors:
• **VARANO, Amedeo**
  **1190 Vorst (BE)**
• **PEUMANS, Dries**
  **9340 Lede (BE)**
• **ROLAIN, Yves**
  **1500 Halle (BE)**

(74) Representative: **Winger**
**Mouterij 16 bus 101**
**3190 Boortmeerbeek (BE)**

(54) **METHOD FOR REPRESENTING A NONLINEAR SYSTEM**

(57)     The present invention relates to determining a Volterra series representation of a nonlinear system. According to the method a bandpass input signal and an output signal in response to the input signal are received. Further inputs are the expected maximal nonlinearity order in the system and the highest order of the Taylor approximation of the kernels in the Volterra representation. The frequencies excited in input and output signal spectrum are determined. For each order of kernel in the Volterra series a number of steps are performed to determine a Taylor series approximation, wherein coefficients, depending on the set of excited frequencies and on the central frequency bin, are multiplied with derivatives which are model parameters of the nonlinear system. The coefficients are determined via transformations between time and frequency domain. A least-squares problem is solved to obtain the actual model parameter values, thereby making use of the spectrum of the measured output signal and said coefficients. The Volterra series representation of the nonlinear system can then be determined using the model parameters for the different kernels.

Fig.3

**Description**

**Field of the invention**

The present invention is generally related to the linearization of wideband communication systems. More in particular, it relates to a method for the behavioural modelling of nonlinear communication systems based on a Volterra series approach.

**Background of the invention**

High power efficiency and linearity are indispensable requirements of any radiofrequency (RF) wired or wireless transceiver system. The component that largely dictates these requirements is the power amplifier that is responsible for amplifying the communication signal to power levels suitable for transmission. Simultaneously maximizing the efficiency and linearity is a challenging task as both requirements contradict each other: a high power efficiency is generally associated with low linearity and vice versa. To optimize this efficiency vs linearity trade-off, communication system designers prefer first optimizing the power efficiency regardless of the linearity repercussions, and afterwards applying linearization techniques to compensate for the generated nonlinear distortion. In industrial and academic communities digital predistortion is widely regarded as the preferred technique for power amplifier linearization.

As the name suggests, predistortion allows linearizing the overall system behaviour by predistorting the input signal of the power amplifier to compensate the generated nonlinear distortion. Essentially, the input signal is modified in anticipation of the power amplifier's nonlinear distortion, with the goal to obtain a distortion-free output. Most commonly, a digital signal processing unit is used to modify the input signal in the digital domain, at baseband frequencies. An essential part of any digital predistortion technique or system is the availability of a nonlinear behavioural model that captures the inverse response of the power amplifier. In the search of a suitable nonlinear model, it is of critical importance to make a well-balanced compromise between the attainable model accuracy, parameter parsimony, and computational complexity. Over the years, several modelling approaches have been developed that trade-off these requirements, such as lookup table-based models, dynamic nonlinear polynomial models, time-delayed neural networks, and nonlinear AR(MA)X models. Out of these approaches the dynamic nonlinear polynomial models, which are based on Volterra theory, have become the de facto industry standard.

The Volterra series description of a nonlinear system is a powerful behavioural modelling framework that enables simultaneously capturing nonlinear and short-term/long-term memory effects in an accurate way. As high accuracy inevitably comes at a cost, the original Volterra series is plagued by a combinatorial explosion of the number of coefficients, making it intractable to estimate and implement on real hardware for digital predistortion purposes. To deal with this complexity burden, block-structured models have been introduced that greatly reduce the required number of coefficients. Popular compact model structures are Hammerstein, Wiener, parallel Hammerstein, parallel Wiener, pruned Volterra series, and memory polynomials. Almost all current implementations of these block-structured models use a time-domain description, as this makes them easily implementable on a digital signal processor. Unfortunately, the use of these compact models has one crucial disadvantage: the modelling accuracy is decreased, which negatively impacts the performance of the digital predistortion. Hence, there is a continuous need to optimize the accuracy-parsimony trade-off of the behavioural model in support of an improved linearization of transceiver systems.

There is thus a need for methods for deriving a representation of nonlinear systems wherein at least some of the drawbacks of the prior art solution are avoided or overcome.

**Summary of the invention**

It is an object of embodiments of the present invention to provide for a method for representing a nonlinear system, for example a communication system comprising one or more nonlinear components.

The above objective is accomplished by the solution according to the present invention.

In a first aspect the invention relates to a computer-implemented method for determining a representation of a nonlinear system, comprising :

- receiving a bandpass input signal applied to the nonlinear system and a measured output signal of the nonlinear system obtained in response to the input signal,
- selecting a nonlinearity order expected to be present in the nonlinear system, said nonlinearity order determining a maximal order of a kernel in a Volterra series representation of the nonlinear system,
- extracting from the spectrum of said input signal a set of excited frequency bins and a central frequency bin,
- calculating a set of excited frequency bins present in the output signal from the nonlinearity order and the set of excited frequency bins in the input signal,

- selecting a highest order of a Taylor series approximation for each kernel in the Volterra series representation,
- determining said Taylor series approximation comprising coefficients, depending on the set of excited frequencies in the input signal and on said central frequency bin, multiplied with derivatives forming model parameters of the nonlinear system, whereby, for each model parameter, said coefficients are determined via transformations between time and frequency domain,
- retrieving values for the model parameters by solving a least-squares problem, thereby exploiting the spectrum of the measured output signal and said coefficients,
- determining the Volterra series representation of the nonlinear system using the model parameters in the Taylor series approximation for the different kernels.

The proposed solution indeed allows for obtaining a Volterra series representation of the nonlinear system in a computationally efficient way. For the method to work, at the input is provided a bandpass signal which has been applied or is being applied to the considered nonlinear system, an output signal measured in response to the input bandpass signal, a nonlinearity order that determines the maximal order of a kernel in the Volterra series representation and the highest order appearing in the Taylor series representation for each kernel. From this information the excited frequencies bins in the input and output spectrum are derived. For each kernel a Taylor series approximation is then determined, comprising coefficients depending on the set of excited frequencies in the input signal and on the central frequency bin, multiplied with (partial) derivatives which form model parameters of the nonlinear system. More specifically, the coefficients comprise differences between frequency bins in the spectrum of the input signal and the central frequency bin. The coefficients are determined for each model parameter via transformations between time and frequency domain, preferably using forward and inverse Fourier transforms. Values for the model parameters are obtained by solving a least-squares problem. With the obtained model parameter values the Taylor series approximations for the different kernels can be determined, which together yield the Volterra series representation of the nonlinear system under study. This representation of the nonlinear system can subsequently advantageously be used for various purposes, like a control synthesis application or predistortion of a communication system, without being limited thereto.

In advantageous embodiments the nonlinear system is a communication system, for example a transceiver (transmitter/receiver) system comprising one or more nonlinear components like a power amplifier and/or a mixer.

It is an advantage of the proposed method that the calculation time is independent of the input signal. Whereas in prior art solutions all combinations of frequency bins had to be calculated and stored when non-parametrically calculating the Volterra kernels, in the present invention the complexity of the input signal has no effect on the calculation time. The various contributions to a certain frequency bin in the output signal spectrum are calculated in an efficient and implicit way, thereby avoiding the exhaustive search performed in the prior art solutions.

Another major advantage of the model applied in the present invention is that it is parsimonious. Few model parameters are needed for obtaining an adequate model of the nonlinear system. For example, in a typical use case less than 10 model parameters are required, compared to more than 30 model parameters in state-of-the-art models.

It is an important benefit of the proposed method that in contrast to prior art models, the model parameters are directly interpretable. The resulting model parameters are directly linkable to the (derivative of the) Volterra kernels. It gives an intuition about how smoothly varying the kernel is around the operating point.

Also the so-called hyperparameters of the model applied in this invention, i.e. the order of nonlinearity of the considered system and the degree of the Taylor expansion, are intuitive. The hyperparameters can be seen as the knobs to tune the model and to influence its performance. The order of the highest nonlinearity kernel can for example graphically be deduced from the response of the system to a multisine. The order of the Taylor degree expansion indicates 'how well' the kernels should be approximated, thereby trading-off computational load and performance.

In preferred embodiments the method further comprises :

- extending the spectrum of the input signal so that harmonics can be accommodated occurring due to a nonlinearity of up to the maximal order,
- constructing a first masked version and a second masked version of the extended spectrum, said first masked version containing only spectral values corresponding to positive excited frequency bins of the extended spectrum and the second masked version containing only spectral values corresponding to negative excited frequency bins of the extended spectrum,
- constructing a first difference vector containing the difference between the central frequency bin and the positive excited frequency bins and a second difference vector containing the difference between the central frequency bin and the negative excited frequency bins.

The above steps yield intermediate data that advantageously can be applied in the later calculations.

In some embodiments the steps of extending the spectrum of the input signal, constructing the masked first and second versions and the first and second difference vectors are performed separately for each order k lower than the maximal order of a kernel in the Volterra series representation.

In preferred embodiments the step of retrieving values comprises filling a regression matrix. Preferably the regression matrix has dimensions determined by the size of the set of excited frequency bins present in the output signal and the number of model parameters to be estimated.

In an advantageous embodiment the method comprises a step of normalizing the columns of the regression matrix.

In one embodiment a row-specific weighting is performed in the regression matrix as a function of the variance of the spectrum of the measured output signal.

Advantageously, in the step of determining the Taylor series approximation analytically exact expressions are calculated for the derivatives or partial derivatives. Doing so yields the best approximation for determining the model parameters.

Alternatively, a simplified approach can be adapted in certain embodiments, wherein determining the Taylor series approximation for each kernel is performed under the assumption that (partial) derivatives of a given order in the Taylor series approximation for a same kernel are identical.

In a preferred embodiment the method further comprises a step of providing a list of frequency bins in the spectrum of the measured output signal that are not to be considered.

In some embodiments the method comprises a step of determining an estimation of the signal spectrum output by the nonlinear system when the bandpass input signal is applied.

In further embodiments the nonlinearity order is lowered when in the spectrum of the measured output signal no nonlinear contributions are found corresponding to said nonlinearity order.

In preferred embodiments the method comprises determining for each order of nonlinearity up to said maximal order a set of exponents for said coefficients.

In preferred embodiments the non-linear system is a communication system.

In one aspect the invention relates to a program executable on a programmable device containing instructions which, when executed, perform the method as previously described.

In another aspect the invention relates to a computer-readable medium comprising instructions which, when executed by a computer, cause the computer to carry out the method as described above.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

## Brief description of the drawings

The invention will now be described further, by way of example, with reference to the accompanying drawings, wherein like reference numerals refer to like elements in the various figures.

Fig.1 illustrates the input and output spectrum of a simple exemplary system.

Fig.2 illustrates the input spectrum $U$ and output spectrum $Y$ of a simulated system with third- and fifth-order static nonlinearities. It is not possible to deduce from the top graph that the system has a fifth order nonlinearity.

Fig.3 illustrates a flowchart of an embodiment of the method according to the present invention.

Fig.4 illustrates the normalised mean squared error (NMSE) between the modelled output and the real one, for increasing input power, averaged over seven different phase realisations of the input signal.

Fig.5 visualises the error between the simulated output (Y) and the modelled output for different input powers : (a) low input power; (b) medium input power and (c) high input power.

Fig.6 illustrates the normalised mean squared error (NMSE) between the modelled output and the real one, for increasing input power, averaged over seven different phase realisations of the input signal. The continuous lines are obtained by using all model parameters, the dashed lines are obtained by using the three most contributing model parameters.

## Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention aims to propose a computer-implemented algorithm to derive a representation of a nonlinear system using a novel approach based on frequency domain Volterra series. The nonlinear system under test is in preferred embodiments a communication system, for example a transceiver. Components like a power amplifier and/or a mixer comprised in such systems render the system as a whole nonlinear. It is to be noted however that the invention is not limited to the field of communication systems. The approach presented here can be applied to nonlinear systems encountered in any application field.

In the description below, first a general, more theoretical explanation of the approach adopted in the present invention is provided. Next, a more pragmatic description of the various steps performed in the method is given, including optional steps that further optimize the proposed solution.

As generally known in the art, a system is linear when the response to a linear combination of inputs $u_i$ is equal to the same linear combination of the responses $y_i$ obtained when the inputs are applied separately, i.e. $u_1 \rightarrow y_1$, $u_2 \rightarrow y_2$, $\alpha u_1 + \beta u_2 \rightarrow \alpha y_1 + \beta y_2$, with $\alpha, \beta \in \mathbb{R}$. Assume now an input signal u comprising a sum of sine waves of different frequency and phase. A linear system excited by such an input signal has an output $y$ with the same excited frequencies, albeit with a different magnitude and phase.

However, when a system is nonlinear, the output signal contains excited frequencies that are not necessarily present in the input signal. A static nonlinearity of order $k$ results in an output signal wherein the input frequencies taken $k$ frequencies at a time (with repetition being allowed) are excited. The total number of combinations of frequencies that a nonlinear system of order $k$ will excite if the input is a sum of $N$ frequencies can be calculated as $C_{2N+k-1}^{k}$, where $C_n^k$ is a shorthand notation for the binomial coefficient:

$$C_n^k = \binom{n}{k}$$

The term $2N$ is required since both positive and negative frequencies are excited. The term $k - 1$ takes into account the repetition.

As example a multisine input signal is considered that excites three frequencies: 110, 112 and 114 Hz. All have unitary magnitude and no phase-offset:

$$u(t) = \sin(2\pi 110t) + \sin(2\pi 112t) + \sin(2\pi 114t)$$

This signal is applied to a static nonlinear system :

$$y(t) = u^3(t).$$

A nonlinear system of order $k$ has $C_{2N+k-1}^k$ possible combinations to take the $N$ input frequencies $k$ at a time (with repetition allowed). For the example, $k = 3$ and $N = 3$, so $C_{2\cdot3+3-1}^3 = 56$. The spectral contributions in the output are at the frequencies of Table 1 (the unit Hz is implicitly assumed below) :

| | | | | | | | | | | | | |
|---|---|---|---|---|---|---|---|---|---|---|---|---|
| −114 | + | −114 | + | −114 | = | −342 | −112 | + | −110 | + | 112 | = | −110 |
| −114 | + | −114 | + | −112 | = | −340 | −112 | + | −110 | + | 114 | = | −108 |
| −114 | + | −114 | + | −110 | = | −338 | −112 | + | 110 | + | 110 | = | 108 |
| −114 | + | −114 | + | 110 | = | −118 | −112 | + | 110 | + | 112 | = | 110 |
| −114 | + | −114 | + | 112 | = | −116 | −112 | + | 110 | + | 114 | = | 112 |
| −114 | + | −114 | + | 114 | = | −114 | −112 | + | 112 | + | 112 | = | 112 |
| −114 | + | −112 | + | −112 | = | −338 | −112 | + | 112 | + | 114 | = | 114 |
| −114 | + | −112 | + | −110 | = | −336 | −112 | + | 114 | + | 114 | = | 116 |
| −114 | + | −112 | + | 110 | = | −116 | −110 | + | −110 | + | −110 | = | −330 |
| −114 | + | −112 | + | 112 | = | −114 | −110 | + | −110 | + | 110 | = | −110 |
| −114 | + | −112 | + | 114 | = | −112 | −110 | + | −110 | + | 112 | = | −108 |
| −114 | + | −110 | + | −110 | = | −334 | −110 | + | −110 | + | 114 | = | −106 |
| −114 | + | −110 | + | 110 | = | −114 | −110 | + | 110 | + | 110 | = | 110 |
| −114 | + | −110 | + | 112 | = | −112 | −110 | + | 110 | + | 112 | = | 112 |
| −114 | + | −110 | + | 114 | = | −110 | −110 | + | 110 | + | 114 | = | 114 |
| −114 | + | 110 | + | 110 | = | 106 | −110 | + | 112 | + | 112 | = | 114 |
| −114 | + | 110 | + | 112 | = | 108 | −110 | + | 112 | + | 114 | = | 116 |
| −114 | + | 110 | + | 114 | = | 110 | −110 | + | 114 | + | 114 | = | 118 |
| −114 | + | 112 | + | 112 | = | 110 | 110 | + | 110 | + | 110 | = | 330 |
| −114 | + | 112 | + | 114 | = | 112 | 110 | + | 110 | + | 112 | = | 332 |
| −114 | + | 114 | + | 114 | = | 114 | 110 | + | 110 | + | 114 | = | 334 |
| −112 | + | −112 | + | −112 | = | −336 | 110 | + | 112 | + | 112 | = | 334 |
| −112 | + | −112 | + | −110 | = | −334 | 110 | + | 112 | + | 114 | = | 336 |
| −112 | + | −112 | + | 110 | = | −114 | 110 | + | 114 | + | 114 | = | 338 |
| −112 | + | −112 | + | 112 | = | −112 | 112 | + | 112 | + | 112 | = | 336 |
| −112 | + | −112 | + | 114 | = | −110 | 112 | + | 112 | + | 114 | = | 338 |
| −112 | + | −110 | + | −110 | = | −332 | 112 | + | 114 | + | 114 | = | 340 |
| −112 | + | −110 | + | 110 | = | −112 | 114 | + | 114 | + | 114 | = | 342 |

Table 1

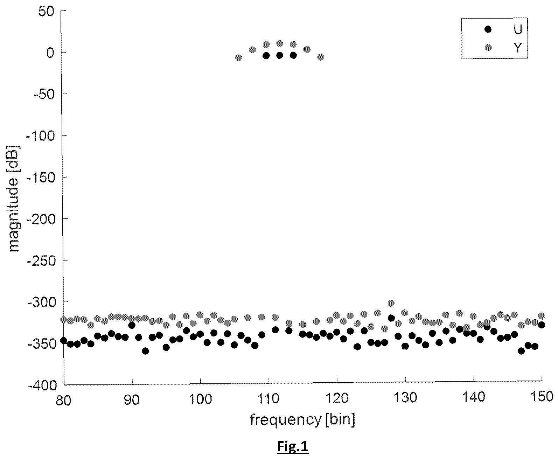

Indeed 56 possible combinations are found. However not all combinations result in distinct contributions. E.g., 110 can be formed in four different ways (indicated by a frame). It is in general not possible to predict how many combinations result in the same contribution. For a signal of length 800 samples, sampled at 800 Hz, the resulting spectrum around the input excited frequencies is depicted in Fig.1. The central frequency is taken to be $f_0$ = 112 *Hz*.

The observations made above for static nonlinear systems can be generalised to dynamic PISPO nonlinear systems by means of Volterra series. A PISPO (period input same period output) system has a steady-state output response *y*(*t*) with the same period as the periodic input signal *u*(*t*). Its time domain Volterra series representation is then given by

$$y(t) = \sum_{k=0}^{\infty} y_k(t) = h_0 + \sum_{k=1}^{\infty} \int_{-\infty}^{\infty} \cdots \int_{-\infty}^{\infty} h_k(\tau_1, \ldots, \tau_k) u(t - \tau_1) \cdots u(t - \tau_k) d\tau_1 \cdots d\tau_k.$$

The $h_k$ are called the kernels of the Volterra series. This representation can be seen as a generalisation of the Taylor series for dynamic systems. Indeed, for $k$ = 1 the expression simplifies to the well-known linear time-invariant (LTI) impulse response representation, with $h_1(t)$ the impulse response. The $h_k$ can then be seen as a generalisation of the impulse response to higher dimensions. The Volterra series only converges for weakly nonlinear systems. However, as will be detailed later, the approach adopted here makes a least-squares approximation of the series, and is therefore not limited to weakly nonlinear systems.

In the present invention the frequency domain equivalent of the Volterra series is used. Noting that a convolution and multiplication in the time domain become a multiplication and convolution in the frequency domain, respectively, the $k$th order output $y_k(t)$ is given by

$$Y_k(\omega_1, \ldots, \omega_k) = H_k(\omega_1, \ldots, \omega_k)\, U(\omega_1) * \cdots * U(\omega_k).$$

where $*$ denotes the convolution product.

A non-parametric estimate of the kernels $H_k$ quickly becomes unmanageable, as it increases combinatorically with both the nonlinearity order $k$ as well as the total number of excited frequencies $N$ in the input signal. The non-parametric frequency domain representation of the Volterra kernels is therefore never used in practice.

In the prior art a tractable model is obtained by imposing a structure on the kernels, e.g. Wiener, Hammerstein, Wiener-Hammerstein, Hammerstein-Wiener or nonlinear state-space systems. One major drawback of these approaches, however, is that the imposed structure might be different from the underlying structure of the system, and the derived model therefore is impaired with a significant bias or model error. The number of parameters still increases considerably with the order of the kernel.

The solution according to the present invention, on the contrary, is based on a model that does not impose a structure, but exploits known, theoretical properties of the kernels in an advantageous novel way. By doing so, the number of parameters remains modest while the model flexibility remains high enough to model the targeted nonlinear systems, for example RF communication systems.

A lot of information about the nonlinearity of a system can be extracted from the spectrum of its response by comparing this output spectrum to the spectrum of the input signal. This has motivated the inventors to look for a frequency domain approach to model nonlinear systems. A good model is parsimonious in the parameters it needs to estimate. Preferably these parameters have a physical relationship with the underlying structure of the studied system. State-of-the-art models fail to meet these requirements. The approach adopted in this invention approximates in a least-squares sense the Volterra series expansion. Even if the series does not converge (or even diverges), the model response approximates the system response closely. The model response may however oscillate around the system response if discontinuities are present in the original system response. The model parameters in the proposed approach are interpretable, which avoids the need to use heuristics or multi-dimensional searches to determine appropriate values for its hyperparameters. Additionally, the parameter estimation can be solved in linear least-squares sense and it is implemented such that the calculation time is independent of the number of excited frequencies in the input signal.

From the literature the theoretical result is known that every Volterra kernel has a symmetric representation. Any asymmetric representation can always be transformed into a symmetric one. In the method of the invention a model is used in a limited band that is excited by the input signal to the nonlinear system. It is therefore (i) assumable that the kernels will locally be smoothly varying, and (ii) possible to write every excited frequency $f_{\text{tot}}$ in the band of interest as $f_0 + \Delta f$, where $f_0$ may be the centre frequency of the band, and $\Delta f$ is the distance between $f_0$ and $f_{\text{tot}}$. This was an incentive to investigate an approach based on a Taylor series expansion around $f_0$. It is important to note that the frequency $f_0$ is not necessarily the centre frequency of the band. The frequency around which the Taylor expansion is performed, may be any frequency in the band. As well known in the art, the general expression of the Taylor expansion of a $k$-variate function $h(x_1', \ldots, x_k')$ around $(x_1 + a_1, \ldots, x_k + a_k)$ is given by

$$h(x_1 + a_1, \ldots, x_k + a_k) = \sum_{n=0}^{\infty} \frac{1}{n!} \left( \sum_{i=1}^{k} a_i \frac{\partial}{\partial x_i'} \right)^n h(x_1', \ldots, x_k') \bigg|_{(x_1, \ldots, x_k)}$$

The linear Volterra kernel $H_1(f)$ evaluated in $f_{\text{tot}}$ around central frequency $f_0$ ($f_{\text{tot}} = f_0 + \Delta f$) can be approximated by a third order Taylor expansion as

$$H_1(f_{\text{tot}}) \approx H_1(f_0) + \Delta f \frac{dH_1}{df}\bigg|_{f_0} + \frac{1}{2}(\Delta f)^2 \frac{d^2 H_1}{df^2}\bigg|_{f_0} + \frac{1}{3!}(\Delta f)^3 \frac{d^3 H_1}{df^3}\bigg|_{f_0}$$

The contribution to the output signal of the linear term at a certain frequency only depends on the input spectrum at that same frequency. This term captures the LTI behaviour of the system. When a system also exhibits nonlinear behaviour, this approximation proves insufficient. To ameliorate the prediction capability of the model, higher-order Volterra kernels are needed.

The derivations below are performed around the centre frequency $f_0$ of the bandpass input signal. The distortions around $f_0$ in the output signal are then only caused by odd nonlinearities. Indeed, the even nonlinearities fall around DC (which lies outside the frequency band of interest) or even multiples of $f_0$ (which also lie outside the band of interest). In a general case, however, the even distortions cannot be neglected. The method proposed in this invention works equally well for describing and modelling nonlinearities induced by even nonlinear behaviour.

Firstly, the most elementary odd-order distortion is considered. It has an associated kernel $H_3(f_1, f_2, f_3)$ which can be assumed symmetric. Hence, a partial derivative with respect to a certain variable is the same as the partial derivative with respect to another variable, except for a permutation of the variables. Therefore, if the resulting functions are evaluated in a point that remains unchanged when the permutation is applied, their value is equal.

The resulting output frequency in the band of interest is again denoted by $f_{tot}$. The third-order kernel is however a function of three frequency variables $f_1$, $f_2$ and $f_3$. This triplet of frequencies is linked to $f_{tot}$ by its sum: $f_1 + f_2 + f_3 = f_{tot}$ = $\Delta f + f_0$. One can write $f_1 = \Delta_1 + f_0$, $f_2 = \Delta_2 + f_0$ and $f_3 = \Delta_3 - f_0$, with the constraint that $\Delta f = \Delta_1 + \Delta_2 + \Delta_3$. Note there must be two frequencies around $f_0$ and one around $-f_0$ to have a resulting excited frequency around $f_0$. In general, an odd kernel of order $k$ needs $(k + 1)/2$ positive $f_0$ contributions and $(k - 1)/2$ negative ones, such that $f_0(k + 1)/2 + (-f_0)(k - 1)/2 = f_0$. In this description the convention is adopted that the first $(k + 1)/2$ variables are evaluated in frequencies of the form $f_i = \Delta_i + f_0$, and the remaining variables (the last $(k - 1)/2$) are evaluated in frequencies of the form $f_i = \Delta_i - f_0$.

The first-order Taylor expansion of the cubic Volterra kernel around $(f_1, f_2, f_3)$ is given by

$$H_3(f_1, f_2, f_3) \approx H_3(f_0, f_0, -f_0) + \Delta_1 \left.\frac{\partial H_3}{\partial f_1}\right|_{(f_0, f_0, -f_0)} + \Delta_2 \left.\frac{\partial H_3}{\partial f_2}\right|_{(f_0, f_0, -f_0)} + \Delta_3 \left.\frac{\partial H_3}{\partial f_3}\right|_{(f_0, f_0, -f_0)}$$

Due to the symmetry of the kernel, the multiplicative factor of $\Delta_1$ and $\Delta_2$ is the same. The analytic expressions of the partial derivatives of the terms with $\Delta_1$ and $\Delta_2$ are also equal, except for a permutation of $f_1$ and $f_2$. However, since the point at which the functions are evaluated, does not change after applying the same permutation (switching the first variable with the second variable in $(f_0, f_0, -f_0)$ results again in $(f_0, f_0, -f_0)$), the numerical value of $\left.\frac{\partial H_3}{\partial f_1}\right|_{(f_0, f_0, -f_0)}$ and $\left.\frac{\partial H_3}{\partial f_2}\right|_{(f_0, f_0, -f_0)}$ is the same. This additional symmetry is exploited further on.

To ease notation, in the remainder of this description $\frac{\partial}{\partial +}$ represents a partial derivative with respect to a variable associated with $+ f_0$ evaluated in $(f_0, ..., f_0, -f_0, ..., -f_0)$, where there are $\lceil k/2 \rceil$ positive $f_0$'s and $\lfloor k/2 \rfloor$ negative $f_0$'s. Analogously, $\frac{\partial}{\partial -}$ represents a partial derivative with respect to a variable associated with $-f_0$ again evaluated in $(f_0, ..., f_0, -f_0, ..., -f_0)$. The ceiling operation $\lceil q \rceil$ takes the least integer greater than or equal to $q$, whereas the flooring operation $\lfloor q \rfloor$ takes the greatest integer less than or equal to $q$. Prime signs are used to distinguish mixed derivatives taken with respect to variables associated to the same sign of $f_0$. E.g., for a third order kernel, $\left.\frac{\partial^2 H_3}{\partial f_1 \partial f_2}\right|_{(f_0, f_0, -f_0)}$ is noted as $\frac{\partial^2 H_3}{\partial + \partial +'}$ because $f_1$ and $f_2$ are evaluated in frequencies of the form $\Delta_i + f_0$.

The third-order Taylor expansion of the cubic Volterra kernel around $(f_1, f_2, f_3)$ can then be expressed as

$$H_3(f_1, f_2, f_3) \approx H_3(f_0, f_0, -f_0) + (\Delta_1 + \Delta_2)\frac{\partial H_3}{\partial +} + \Delta_3 \frac{\partial H_3}{\partial -}$$

$$+ \frac{1}{2}\left((\Delta_1^2 + \Delta_2^2)\frac{\partial^2 H_3}{\partial +^2} + \Delta_3^2 \frac{\partial^2 H_3}{\partial -^2} + 2\left((\Delta_1 + \Delta_2)\Delta_3 \frac{\partial^2 H_3}{\partial + \partial -} + \Delta_1 \Delta_2 \frac{\partial^2 H_3}{\partial + \partial +'}\right)\right)$$

$$+ \frac{1}{3!}\left((\Delta_1^3 + \Delta_2^3)\frac{\partial^3 H_3}{\partial +^3} + \Delta_3^3 \frac{\partial^3 H_3}{\partial -^3} + 3! \, \Delta_1 \Delta_2 \Delta_3 \frac{\partial^3 H_3}{\partial + \partial +' \partial -}\right.$$

$$\left. + 3\left((\Delta_1 + \Delta_2)\Delta_1 \Delta_2 \frac{\partial^3 H_3}{\partial +^2 \partial +'} + (\Delta_1^2 + \Delta_2^2)\Delta_3 \frac{\partial^3 H_3}{\partial +^2 \partial -} + (\Delta_1 + \Delta_2)\Delta_3^2 \frac{\partial^3 H_3}{\partial + \partial -^2}\right)\right).$$

The above expression is for one permutation of the set $\{f_1, f_2, f_3\}$, which in itself describes only one contribution out of the possible choices of three frequencies that sum to $f_{tot}$. When a multisine excitation signal is applied to the nonlinear system, there is a very large number of combinations of excited frequencies that sum to the same value. To correctly describe the system at a certain frequency, all combinations and permutations that contribute to the output at that frequency have to be considered, i.e. for the third order contribution at $f_{tot}$

$$Y_3(f_{\text{tot}}) = \sum_{\substack{\{f_1, f_2, f_3\} \in f_{\text{exc}} \\ s.t. f_1 + f_2 + f_3 = f_{\text{tot}}}} H_3(f_1, f_2, f_3) \, U(f_1) * U(f_2) * U(f_3)$$

where $f_{\text{exc}}$ is the set of all excited frequencies (positive and negative) in the input signal. The number of ways to permute a given set of frequencies increases combinatorically with the cardinality of the set. It therefore quickly becomes unmanageable (in terms of computation time and memory) to explicitly retrieve these combinations once the excitation signal contains more than a few spectral contributions, or the order of the kernel is increased. This invention circumvents this issue by moving back and forth between the time domain and frequency domain, for example using an (inverse) discrete Fourier transform, as detailed below.

The order up to which the Volterra series is considered, depends on the application and the system to be modelled. The procedure to approximate the higher-order kernels is identical to what was discussed above, with the only difference that the number of variables increases, and hence also the number of terms. It becomes cumbersome and involved to write everything down in a comprehensive way. However, the total number of unknowns $n_\theta$ (i.e., the partial derivatives evaluated in $(f_0, ..., f_0, -f_0, ..., -f_0)$) does not grow combinatorically thanks to the symmetry of the kernels. E.g., for the quintic kernel, the linear term contains 2 unknowns instead of 5, the second order term contains 5 unknowns instead of 15, and the third order term 9 instead of 35.

Using the expressions above, it becomes possible to approximate the Volterra series up to an arbitrary order with an arbitrary Taylor degree. The unknowns to be estimated are the partial derivatives of the kernels evaluated in the fixed point $(f_0, ..., f_0, -f_0, ..., -f_0)$. The partial derivatives are the system's model parameters to be estimated. This estimation problem can be written as a linear least-squares problem since it is linear in the parameters. As already mentioned, one major challenge is to retrieve all combinations of frequencies stemming from the input signal that contribute to the output signal at a frequency falling within the band of interest. It was already explained that it is unmanageable to do this by exhaustive search, since the amount of excited input frequencies for a practical test signal can quickly become large (e.g., it is not uncommon for multisine input signals to excite more than 100 spectral lines) and the number of contributions grows combinatorically with the degree of the Taylor expansion of each kernel. Even with significant optimisations in place, the problem remains that all these contributions need to be stored in an (enormous) array in memory that needs to be accessed many times. This substantially increases the computational time and memory footprint. However, the inventors have realised that the problem of explicitly finding and storing all these contributions can be circumvented by expressing the Taylor series approximation of the kernels in an efficient way, by transitioning between the time and frequency domain using the (inverse) fast Fourier transform, as described in detail below.

Instead of applying the analytically exact method described above, in some embodiments of the invention a heuristic approximation of the analytically exact method can be adopted. It is experimentally proven that this approach also yields significant model fit. It is then assumed that the partial derivatives of the kernels evaluated in the point of interest are all equal to each other for a fixed derivative order. An expression similar to the first order kernel is then obtained. E.g., the $k$th order kernel expanded up to Taylor degree 3 simplifies to

$$H_k(f_{\text{tot}}) \approx H_k(f_0) + \Delta f \left.\frac{dH_k}{df}\right|_{f_0} + \frac{1}{2}(\Delta f)^2 \left.\frac{d^2 H_k}{df^2}\right|_{f_0} + \frac{1}{3!}(\Delta f)^3 \left.\frac{d^3 H_k}{df^3}\right|_{f_0},$$

where $\Delta f$ still denotes the difference between $f_{\text{tot}}$ and $f_0$, and, with some abuse of notation, $\cdot |_{f_0}$ indicates a partial derivative evaluated in $(f_0, ..., f_0, -f_0, ..., -f_0)$. Note that this approach further reduces the needed amount of model parameters. This comes at the cost of a degraded model fit compared to the theoretically exact model, but still performs significantly better than the current state-of-the-art solutions.

The kernels to be approximated (linked to the nonlinear behaviour of the system) and the degree of their Taylor expansion (linked to how smooth the kernels vary) are the hyperparameters of the model, i.e. they are the tuneable variables that influence the performance of the model. In some embodiments the order of nonlinearity needed for characterizing a certain system in a frequency band is fairly accurately deduced from the response of the system to a multisine. It can roughly be equated to the ratio of the bandwidth of the response to the bandwidth of the multisine. The highest degree of the Taylor expansion can then be set to a value that yields an acceptable trade-off between performance versus the number of model parameters. In other embodiments the order of nonlinearity needed for identifying the system is set by the user.

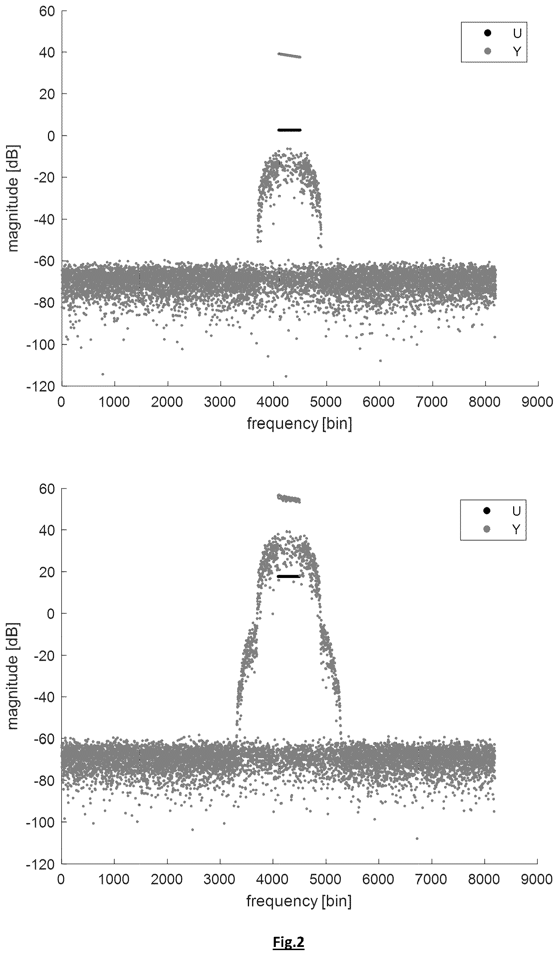

By way of example the input and simulated output are considered of a dynamic system with third and fifth order static nonlinearities, visualised in Fig.2 for different input powers. The input signal U excites in a band from around the bin with index 4100 to bin 4500. The noisy output in the top graph has significant contributions in the band from approximately bin 3700 to 4900, whereas in the bottom graph the output has significant contributions from approximately bin 3300 to 5300. Taking the ratio of the width of these bands, the best educated guess in the top graph is that the system is of nonlinear order 3 ($\approx$ (4900 - 3700)/(4500 - 4100)), whereas for the bottom graph, nonlinear behaviour of order (5300 - 3300)/(4500 - 4100) $\approx$ 5 is visible. Note how it is impossible to deduce from the top graph that the system has a fifth order nonlinearity.

A regression matrix is to be constructed for the model estimation. This regression matrix has as rows the various excited frequencies in the output spectrum. These excited frequencies depend on the input spectrum and the order of the Volterra kernels being considered. The columns of the regression matrix are the terms that are function of the various $\Delta_i$ times the convolution of the input spectrum with itself, summed over all possible combinations of input excited frequencies that lead to a certain output frequency in the frequency band of interest (see the expression of $Y_3(f_{\text{tot}})$ given above). Therefore, only spectral content in a limited number of frequencies is estimated, namely those frequencies expected to be excited in the output spectrum. If there are more (less) excited frequencies than expected, it suffices to adapt (increase or decrease) the maximal considered Volterra kernel. This is a large difference with the time domain approaches applied in the prior art, where both the excited and non-excited frequencies are used during the estimation. The number of rows in the regression matrix is significantly smaller than that of e.g. memory polynomials calculated at once for the whole signal, since the latter have as many rows as time-domain samples (which can easily be more than an order of magnitude larger than the number of rows in the model adopted in this invention).

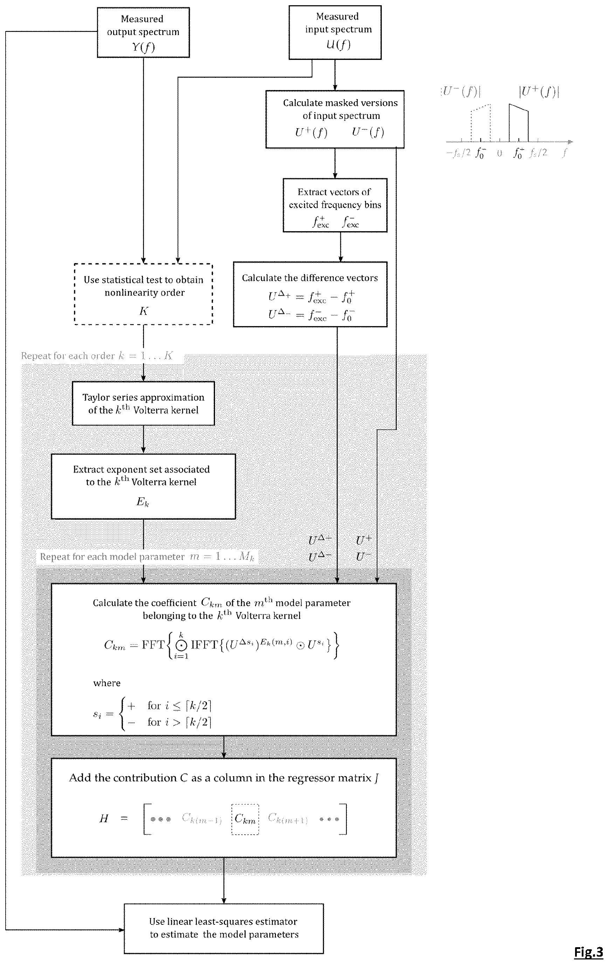

In the method according to this invention the characterisation of the nonlinear system by means of the innovative model described herein is a crucial part. Below is described how the concepts explained previously are actually applied in embodiments of the algorithm to identify the nonlinear system. Reference is hereby made to the flow chart depicted in Fig.3.

The model applied in the method of the invention takes as inputs :

- the spectrum $U$ of the input signal. The input signal may be the signal provided to an arbitrary waveform generator (AWG) or to the input port of the system, depending on what the user wants to use as a reference. If a time domain representation of the input signal is provided to the model, obviously an FFT operation is performed first to convert to the frequency domain.
- the measured output $Y$ of the considered system in response to the input signal. This is needed in order to solve the least-squares problem to estimate the model parameters.
- the nonlinearity order $K$: the order of nonlinearity that is expected to be present in the system under consideration. This is the maximal order of Volterra kernel that will be considered. In some embodiments this maximal nonlinearity order is determined using a statistical test to determine if the spectrum of the measured output contains non-linear contributions of a certain order by checking if significant spectral energy is present at the expected frequencies. In other embodiments the maximal nonlinearity order is input by the user of the model. In preferred embodiments the value of $K$ can be lowered automatically by the algorithm in a further method step if the abovementioned statistical test fails for the user-provided value $K$.
- the order $N$ of the Taylor approximation : the degree up to which one wants to approximate the Volterra kernels. Each kernel may have its own highest order. In an advantageous implementation all considered kernels have the same highest order.

The computer program implementing the method of this invention receives this data as input. The output signal may in some cases come directly from the nonlinear system or may in other cases have been obtained previously and taken from a memory where it was stored after measurement. The algorithm works in bins, i.e. the frequencies excited in the spectra of input and output signal. Each bin can be represented by an index, as already exemplified above.

Optionally, some further parameters can be provided at the input to consider additional information about the system during the estimation of the model parameters, so that the numerical conditioning of the final model parameter calculation is improved. Optional input parameters the user can activate before running the algorithm are for example: performing normalisation of the columns of the regression matrix, performing in the regression matrix row-specific weighting as a function of the variance of the output spectrum, providing a list of bins that should not be considered during estimation. The latter option is to improve the performance for measurements where spurious components (measurement artefacts) might appear (e.g., the local oscillator frequency) that cannot be explained by only considering the input signal $U$. The overall estimate is improved by omitting these 'inexplicable' frequency components. If one or more of such optional parameters are applied, they may be set to a default value in some embodiments. In other embodiments the user can give them an initial value.

The algorithm yields as output in the first place the estimated model parameters $\hat{\theta}$. Further, also the estimated output spectrum $\hat{Y}$ can be obtained, i.e. the spectrum calculated from the estimated model parameters and the input spectrum. This can subsequently be compared to the measured output signal spectrum.

The excited frequency bins $f_{exc}$ and the central bin $f_0$ are first extracted from the input signal. A vector containing the excited bins (for example, represented by their indices) can so be created from the input spectrum. Given the nonlinearity order $K$ and the desired order $N$ of the Taylor expansion (which are both received as input parameters from the user), one can calculate the excited frequencies in the output spectrum and the number of model parameters to be estimated. A loop $k$ (with $k$ = 1, ..., $K$) may be initialized over the nonlinearity orders that need to be considered. In preferred embodiments the following subtasks may then be carried out (see also top part of Fig.3) :

- The input signal is considered in the frequency domain. The input spectrum is ensured to be auto-conjugate (i.e., $X(f_1) = X^*(-f_1)$) and extended to be wide enough to accommodate all harmonics that would arise due to a nonlinearity of order $k$. Alternatively, the extended input spectrum can immediately be made wide enough for accommodating the harmonics due to nonlinearities of up to the maximal order $K$.
- The so obtained extended input spectrum is transformed to the time domain, the result is raised to the $k^{th}$ power and transformed back to the frequency domain.

There are various options available to extract the excited frequencies from the frequency-domain spectrum of the input and output signal. For example, one option is that the user sets a (predefined) threshold and all bins exceeding this threshold are considered to be an excited frequency. Alternatively, one can for example perform a selection in an automatic way by first estimating the noise variance at each frequency and then selecting the excited frequencies as those frequencies where the spectrum power is significantly larger than the estimated noise variance.

The calculations above yield the excited bins in the output spectrum falling in the frequency band of interest as well as the central frequency. Further, starting from the extended input spectrum, advantageously a vector is constructed representing a spectrum only containing the positive frequencies $U^+$ of the extended input spectrum as well as a vector containing the negative frequencies $U^-$. These have the same length as the extended spectrum $U$. Additionally, two difference vectors $U^{\Delta+}$ and $U^{\Delta-}$ are constructed. These contain the difference between the respective excited frequencies of the extended input spectrum and the central frequency. Note that if the input spectrum would contain non-consecutive excited frequencies (i.e. there are gaps in the spectrum), then also $U^{\Delta+}$ and $U^{\Delta-}$ exhibit these gaps.

The regression matrix can then in preferred embodiments be initialised with appropriate dimensions (see also Fig.3) for obtaining the smallest memory footprint. Alternatively, less efficient ways of constructing the regression matrix are possible in other embodiments. Ultimately, the matrix used for estimating the model parameters is the same. As already mentioned above, the size of the regression matrix depends on the excited bins in the output spectrum (= the number of rows, which depends on $U$ and $K$) and the amount of model parameters (= the number of columns, which depends on $K$ and $N$). The regression matrix can next be filled out efficiently by looping over the various nonlinearity orders as indicated previously. Based on the analytic expression of the Taylor series expansion of the Volterra kernel, the appropriate entries are calculated. For example, the first-order kernel ($k=1$) expanded up to order 3 can be written (with $f_1 = f_0 + \Delta_1$) as

$$H_1(f_1) \approx H_1(f_0) + \Delta_1 \frac{dH_1}{d+} + \frac{\Delta_1^2}{2!}\frac{d^2H_1}{d+^2} + \frac{\Delta_1^3}{3!}\frac{d^3H_1}{d+^3}$$

where the derivatives of $H_1$ are the model parameters. The factors containing $\Delta_1$ are known. The Taylor expansion thus comprises coefficients depending on the difference between $f_1$ and the central frequency multiplied with a derivative of $H_1$. Similarly, for the third order kernel ($k=3$) expanded up to order 3 one can write

$$
\begin{aligned}
H_3(f_1, f_2, f_3) \approx\ & H_3(f_0, f_0, -f_0) + (\Delta_1 + \Delta_2)\frac{\partial H_3}{\partial +} + \Delta_3 \frac{\partial H_3}{\partial -} \\
& + \frac{1}{2}\left( (\Delta_1^2 + \Delta_2^2)\frac{\partial^2 H_3}{\partial+^2} + \Delta_3^2 \frac{\partial^2 H_3}{\partial-^2} + 2\left( (\Delta_1 + \Delta_2)\Delta_3 \frac{\partial^2 H_3}{\partial+\partial-} + \Delta_1\Delta_2 \frac{\partial^2 H_3}{\partial+\partial+'} \right) \right) \\
& + \frac{1}{3!}\left( (\Delta_1^3 + \Delta_2^3)\frac{\partial^3 H_3}{\partial+^3} + \Delta_3^3 \frac{\partial^3 H_3}{\partial-^3} + 3!\,\Delta_1\Delta_2\Delta_3 \frac{\partial^3 H_3}{\partial+\partial+'\partial-} \right. \\
& \left. + 3\left( (\Delta_1 + \Delta_2)\Delta_1\Delta_2 \frac{\partial^3 H_3}{\partial+^2\partial+'} + (\Delta_1^2 + \Delta_2^2)\Delta_3 \frac{\partial^3 H_3}{\partial+^2\partial-} + (\Delta_1 + \Delta_2)\Delta_3^2 \frac{\partial^3 H_3}{\partial+\partial-^2} \right) \right).
\end{aligned}
$$

In the above expression for the third order kernel, the partial derivatives of $H_3$ are the model parameters and the factors with a $\Delta$ are known (the first $\lceil k/2 \rceil$ $\Delta$'s are associated with positive bins, the other $\lfloor k/2 \rfloor$ $\Delta$'s are associated with negative bins). These expressions are based on the fact that the excitation is considered in a bandpass signal and that the kernels are symmetric. Again, the Taylor expansion comprises coefficients depending on the difference between frequency bins from the set of excited frequencies in the input signal and the central frequency multiplied with partial derivatives of $H_3$. By using transformations between time and frequency domain, e.g. the Fast Fourier Transform (FFT) and inverse Fast Fourier Transform (IFFT) operation, multiple times, i.e. by switching between the time and frequency domain, it is possible to calculate $Y_3(f_{tot})$ for a given $f_{tot}$ as the sum over all possible permutations and combinations of $\{f_1, f_2, f_3\}$ that yield $f_{tot}$ without explicitly retrieving and storing these frequencies.

$$
Y_3(f_{tot}) = \sum_{\substack{\{f_1, f_2, f_3\} \in f_{exc} \\ \text{s.t.} f_1 + f_2 + f_3 = f_{tot}}} H_3(f_1, f_2, f_3)\, U(f_1) * U(f_2) * U(f_3)
$$

Each row in the regression matrix corresponds to a different excited frequency $f_{tot}$. The various variables already mentioned previously are initialised, that is :

- $U^{\Delta+}$ ($U^{\Delta-}$): difference vector with the same size as the extended input spectrum; at the indices where a positively (negatively) excited bin is, the value equals the difference $\Delta$ between that excited bin and the central excited bin (i.e. the central frequency).
- $U^+$ ($U^-$): vector with the same size as the extended input spectrum; at the indices where a positively (negatively) excited bin is, the value equals the input spectrum $U$.

For every loop $k$ (hence, for every nonlinearity order), first an elementwise multiplication of the time domain equivalent of the input spectrum $k$ times with itself is performed before going back to the frequency domain. This yields the entry in the regression matrix for the constant term $H_i(f_0, ..., f_0, -f_0, ..., -f_0)$.

One of the major advantages of the approach adopted in the present invention is that there is no need to explicitly calculate for every frequency $f_{tot}$ in the output spectrum the sum over all sets of excited frequencies that result in $f_{tot}$. Instead, an exponent set $E_k$ is constructed for each nonlinearity order $k$, consisting of the exponents needed for the various $\Delta_i$. In the example for the linear term ($k = 1$) for $n = 3$ : $E_1 = [1\ 2\ 3]^T$, where $\cdot^T$ denotes the transpose operator, because the linear term contains

$$
\Delta_1 \frac{dH_1}{d+}U(f_1) + \frac{\Delta_1^2}{2}\frac{dH_1}{d+^2}U(f_1) + \frac{\Delta_1^3}{3!}\frac{dH_1}{d+^3}
$$

For the cubic nonlinearity the set $E_3$ comprises exponents $e_+$, $e_{+'}$ and $e_-$ to be calculated, whereby $e_+$ represents the multiplicity of the $\Delta_i$'s associated to the partial derivatives with respect to $+f_0$, $e_{+'}$ the multiplicity of the $\Delta_i$'s associated to the mixed partial derivatives with respect to $+f_0'$, and $e_-$ the multiplicity of the $\Delta_i$'s associated to the partial derivatives with respect to $-f_0$, respectively. For example, considering again $k = 3$ for $n = 3$, there are $\lceil k/2 \rceil = 2$ positive frequencies and $\lfloor k/2 \rfloor = 1$ negative frequency, and from the expression of $H_3$ given above, the following table can be constructed.

|  | $e_+$ | $e_{+'}$ | $e_-$ |
|---|---|---|---|
| $\partial_+$ | 1 | 0 | 0 |
| $\partial_-$ | 0 | 0 | 1 |
| $(\partial_+)^2$ | 2 | 0 | 0 |
| $(\partial_-)^2$ | 0 | 0 | 2 |
| $\partial_+\partial_-$ | 1 | 0 | 1 |
| $\partial_+\partial_{+'}$ | 1 | 1 | 0 |
| $(\partial_+)^3$ | 3 | 0 | 0 |
| $(\partial_-)^3$ | 0 | 0 | 3 |
| $(\partial_+)^2\partial_+$ | 2 | 1 | 0 |
| $(\partial_+)^2\partial_-$ | 2 | 0 | 1 |
| $\partial_+(\partial_-)^2$ | 1 | 0 | 2 |
| $\partial_+\partial_+\partial_-$ | 1 | 1 | 1 |

and thus,

$$E_3 = \begin{bmatrix} 1 & 0 & 2 & 0 & 1 & 1 & 3 & 0 & 2 & 2 & 1 & 1 \\ 0 & 0 & 0 & 0 & 0 & 1 & 0 & 0 & 1 & 0 & 0 & 1 \\ 0 & 1 & 0 & 2 & 1 & 0 & 0 & 3 & 0 & 1 & 2 & 1 \end{bmatrix}^{\mathsf{T}}$$

For the above-mentioned simplified model wherein a heuristic approximation of the analytically exact algorithm is applied, the exponent set $E_k$ is always the same, independent of the order of the kernel $k$. It equals, for a Taylor expansion of order $N$, $E_k = [1 \cdots N]^{\mathsf{T}}$. Remark that this is the structure of the first order kernel generalised to those of higher order.

The next step is to fill in the large regression matrix $H$ for all nonlinear orders so that $Y_{excited} = H\theta$ can be solved. $Y_{excited}$ consists of the output spectrum at the excited frequencies that can arise given the nonlinearity order $K$ provided as input. The large regression matrix $H$ can be obtained by merging a number of smaller regression matrices, each corresponding to one of the Volterra kernels $k = 1, ...,K$. The large regression matrix can then calculate all model parameters at once. Each row in a regression matrix corresponds to a certain $f_{tot}$. It suffices to align the rows of the individual regression matrices and then fill in entries that do not exist with zeros. Note that a regression matrix for a $k$th order kernel has less rows than a $k'$th order kernel when $k' > k$. Alternatively, instead of creating one large regression matrix, the kernels can be modelled sequentially. First, the highest order nonlinearity is estimated, since its kernel is the only one that contributes to the outermost excited frequencies in the spectrum. In a next step, its estimated contribution is removed from the output, such that the nonlinear order of the spectrum is lowered (indeed, all the contributions of the higher orders are removed). The procedure is then repeated up to the linear term.

The parameter vector $\theta$ equals, for an example comprising Volterra kernels of order 1 and 3,

$$\theta = \begin{bmatrix} H_1(f_0) \\ \dfrac{dH_1}{d+} \\ \dfrac{d^2H_1}{d+^2} \\ \dfrac{d^3H_1}{d+^3} \\ H_3(f_0, f_0, -f_0) \\ \dfrac{\partial H_3}{\partial +} \\ \dfrac{\partial H_3}{\partial -} \\ \dfrac{\partial^2 H_3}{\partial +^2} \\ \dfrac{\partial^2 H_3}{\partial -^2} \\ \dfrac{\partial^2 H_3}{\partial + \partial -} \\ \dfrac{\partial^2 H_3}{\partial + \partial +'} \\ \dfrac{\partial^3 H_3}{\partial +^3} \\ \dfrac{\partial^3 H_3}{\partial -^3} \\ \dfrac{\partial^3 H_3}{\partial + \partial +' \partial -} \\ \dfrac{\partial^3 H_3}{\partial +^2 \partial +'} \\ \dfrac{\partial^3 H_3}{\partial +^2 \partial -} \\ \dfrac{\partial^3 H_3}{\partial + \partial -^2} \end{bmatrix} \odot \begin{bmatrix} \alpha_1 \\ \alpha_2 \\ \alpha_3 \\ \alpha_4 \\ \alpha_5 \\ \alpha_6 \\ \alpha_7 \\ \alpha_8 \\ \alpha_9 \\ \alpha_{10} \\ \alpha_{11} \\ \alpha_{12} \\ \alpha_{13} \\ \alpha_{14} \\ \alpha_{15} \\ \alpha_{16} \\ \alpha_{17} \end{bmatrix}$$

The $\odot$ symbol denotes elementwise multiplication. The factors $\alpha_i$ are constants being estimated with the partial derivatives of the kernels. In some embodiments the constants and the partial derivatives can, if desired, be decoupled from each other (at the cost of additional calculations; the constants depend on the analytic expression of the Taylor series (e.g. the factors 1/2, 1/3!, ...) and the symmetries of the kernel).

The first column of the regression matrix can thus be easily filled in, since it equals $U(f_1)$ for the row corresponding to the excited bin $f_1$. Then, the products $\Delta_1 U(f_1)$, $\Delta_1^2 U(f_1)$ and $\Delta_1^3 U(f_1)$ can be calculated and filled in in the second and third column of the regression matrix. $f_1$ is one of the excited bins.

The expression of the column associated to the $m$th term of the Taylor expansion of the $k$th order kernel, denoted as $C_{km}$, can be generalised to

$$C_{km} = \text{FFT}\left( \bigodot_{i=1}^{k} \text{IFFT}\left( \left(U^{\Delta s_i}\right)^{E_k(m,i)} \odot U^{s_i} \right) \right)$$

Here, $E_k(m, i)$ denotes the $m$th row, $i$th column of the exponent set associated to the kernel of order $k$. The $s_i$'s are equal to the sign of the ith column of $E_k$, i.e.

$$s_i = \begin{cases} + & \text{for } i \leq \lceil k/2 \rceil \\ - & \text{for } i > \lceil k/2 \rceil \end{cases}$$

E.g., the last column in the regression matrix corresponding to the third order kernel model parameters ($k = 3$, $m = 12$) can then be filled as follows :

$$\text{FFT} \left( \text{IFFT} \left( \left( U^{\Delta+} \right)^1 \odot U^+ \right) \odot \text{IFFT} \left( \left( U^{\Delta+} \right)^1 \odot U^+ \right) \odot \text{IFFT} \left( \left( U^{\Delta-} \right)^1 \odot U^- \right) \right)$$

The convolution in the frequency-domain is thus avoided by performing a multiplication in the time-domain. This way of calculating the entries in the regression matrix is an important innovative feature of the method proposed in this invention. The FFT and IFFT calculate all contributions, without a need to explicitly construct all frequency combinations.

For the simplified model, the parameter vector simplifies to

$$\theta = \left[ H_1(f_0) \quad \frac{dH_1}{d+}\bigg|_{f_0} \quad \frac{d^2 H_1}{d+2}\bigg|_{f_0} \quad \frac{d^3 H_1}{d+3}\bigg|_{f_0} \quad H_3(f_0, f_0, -f_0) \quad \frac{dH_3}{d+}\bigg|_{f_0} \quad \frac{d^2 H_3}{d+2}\bigg|_{f_0} \quad \frac{d^3 H_3}{d+3}\bigg|_{f_0} \right]^\mathsf{T}$$
$$\odot \left[ \alpha_1 \quad \alpha_2 \quad \alpha_3 \quad \alpha_4 \quad \alpha_5 \quad \alpha_6 \quad \alpha_7 \quad \alpha_8 \right]^\mathsf{T},$$

and $C_{kn}$ becomes

$$C_{kn} = \text{FFT} \left( \text{IFFT} \left( \left( U^{\Delta+} \right)^n \odot U^+ \right) \right).$$

In an additional step the optional inputs can be taken into account that improve the final calculation of the solution to the problem $H\theta = Y_{\text{excited}}$. The subscript $\cdot_{\text{excited}}$ herein refers to the selection of frequency bins that are excited in the output spectrum and $H$ represents the large regression matrix for all nonlinear orders. As already mentioned, such optional input parameters may for example be providing one or more of normalisation of the columns of the regression matrix, row-specific weighting in the regression matrix as a function of the variance of the output spectrum, bins that should not be considered during estimation.

As already mentioned previously, the equation $Y_{\text{excited}} = H\theta$ is then solved using a linear least-squares estimator to estimate the unknown model parameters. Many implementations of least-squares algorithms are known in the art can be applied in the method of the invention to solve the above equation.

The model parameters estimations that result can then be used to write down the Taylor series approximation for the various kernels, thereby obtaining a Volterra series representation of the considered nonlinear system.

To illustrate the filling of the regression matrix the nonlinear system shown in Fig.1 is revisited. The system is to be modelled with the given input signal around the frequencies excited by the input (this is a typical use case for e.g. power amplifiers). From the output spectrum, it is clear that a nonlinearity of order 3 is present ((118 - 106)/(114 - 110) = 3). The maximal considered Volterra kernel order can thus be set to $K = 3$. For the sake of manageable notation, the order of the Taylor approximation is set to $N = 1$. The expressions of the first and third order kernel then become:

$$H_1(f_1) \approx H_1(f_0) + \Delta_1 \frac{dH_1}{d+}$$

$$H_3(f_1, f_2, f_3) \approx H_3(f_0, f_0, -f_0) + (\Delta_1 + \Delta_2) \frac{\partial H_3}{\partial +} + \Delta_3 \frac{\partial H_3}{\partial -}$$

Therefore, there are 5 model parameters to be estimated ($H_1(f_0)$) and $\dfrac{dH_1}{d+}$ for the linear kernel, $H_3(f_0, f_0, -f_0)$, $\dfrac{\partial H_3}{\partial+}$ and $\dfrac{\partial H_3}{\partial-}$ for the cubic kernel). Hence, the regression matrix has 5 columns, one for each model parameter. The $f_0$ frequency is chosen in this example to be $f_0$ = (110 + 114)/2 = 112. Given the input excited frequencies (110, 112 and 114) and the maximal considered nonlinearity order (3), it is possible to say that the excited frequencies $f_{exc}$ in the output spectrum around $f_0$ are 106, 108, 110, 112, 114, 116 and 118. The regression matrix therefore has 7 rows, one for each (expected) excited frequency in the output spectrum.

For the first order kernel, $U^+$ is zero, except at the indices of the input excited frequencies: $U^+(110) = U^+(112) = U^+(114) = 0.5$; also $U^{\Delta+}$ is zero, except at the indices of the excited frequencies: $U^{\Delta+}(110) = 110 - f_0 = -2$, $U^{\Delta+}(112) = 112 - f_0 = 0$, $U^{\Delta+}(114) = 114 - f_0 = 2$. For the first order kernel, no negative counterparts are needed. It is thus possible to construct the regression matrix for the first order kernel:

$$H_1 = \begin{bmatrix} 0.5 & -2 \cdot 0.5 \\ 0.5 & 0 \cdot 0.5 \\ 0.5 & 2 \cdot 0.5 \end{bmatrix} = \begin{bmatrix} 0.5 & -1 \\ 0.5 & 0 \\ 0.5 & 1 \end{bmatrix}$$

The first row is for 110, the middle row for 112 and the last row for 114.

For the third order kernel, the input spectrum is extended to accommodate all third order harmonics. Then $U^+$ can be constructed, which is zero, except at the indices of the nonlinearly excited frequencies around $f_0$: $U^+(106) = 0.375$, $U^+(108) = 1.125$, $U^+(110) = 2.250$, $U^+(112) = 2.625$, $U^+(114) = 2.250$, $U^+(116) = 1.125$, $U^+(118) = 0.375$; again $U^{\Delta+}$ is zero, except at $U^{\Delta+}(106) = -6$, $U^{\Delta+}(108) = -4$, $U^{\Delta+}(110) = -2$, $U^{\Delta+}(112) = 0$, $U^{\Delta+}(114) = 2$, $U^{\Delta+}(116) = 4$, $U^{\Delta+}(118) = 6$. The negative counterparts $U^-$ and $U^{\Delta-}$ can be constructed in a similar way.

From the expression above for the first order Taylor approximation of the third order Volterra kernel, the following table can be constructed (the term $e_{+'}$, which appears from $N = 2$ onward, is kept).

| | $e_+$ | $e_{+'}$ | $e_-$ |
|---|---|---|---|
| $\partial_+$ | 1 | 0 | 0 |
| $\partial_-$ | 0 | 0 | 1 |

The exponent set $E_3$ is thus

$$E_3 = \begin{bmatrix} 1 & 0 & 0 \\ 0 & 0 & 1 \end{bmatrix}$$

This exponent set is needed to take into account all contributions and permutations of triplets of frequencies that sum to a frequency excited in the output:

$$Y_3(f_{tot}) = \sum_{\substack{\{f_1, f_2, f_3\} \in f_{exc} \\ s.t. f_1 + f_2 + f_3 = f_{tot}}} H_3(f_1, f_2, f_3)\, U(f_1) * U(f_2) * U(f_3)$$

E.g. for frequency $f_{tot}$ = 110, $\{f_1, f_2, f_3\}$ = {-114,110,114}, {-114,112,112}, {-112,110,112}, {-110,110,110}, because these four sets of frequencies selected from those that are excited in the input spectrum, sum to 110.

The regression matrix of the third order kernel is

$$H_3 = \begin{bmatrix} 0.375 & -0.250 & -0.250 \\ 1.125 & -0.500 & -0.500 \\ 2.250 & -0.500 & -0.500 \\ 2.625 & 0 & 0 \\ 2.250 & 0.500 & 0.500 \\ 1.125 & 0.500 & 0.500 \\ 0.375 & 0.250 & 0.250 \end{bmatrix}$$

The first column is readily obtained from $U^+$, the other columns from

$$C_{km} = \text{FFT}\left( \bigodot_{i=1}^{k} \text{IFFT}\left( \left(U^{\Delta s_i}\right)^{E_k(m,i)} \odot U^{s_i} \right) \right)$$

where $k = 3$, $m = 1,2$ and $\Delta s_i$ is $\Delta+$ for $i = 1,2$ and $\Delta-$ for $i = 3$. The rows correspond (from top to bottom) with the frequencies from 106 to 118 in steps of 2, the columns correspond to the factors associated with $H_3(f_0, f_0, -f_0)$, $\frac{\partial H_3}{\partial +}$ and $\frac{\partial H_3}{\partial -}$. Note that the ordering of the rows and columns in the regression matrix is arbitrary. Permuting the rows and/or columns does not change the representation of the model.

It is now possible to either only estimate the third order kernel parameters, subtract the estimated response from the measured output and then estimate the first order parameters. Another option is to construct one large regression matrix, where the frequency rows are aligned and missing entries are filled with zeros (e.g. the frequency 106 is not excited by the linear response, so it has a 0 in the regression matrix).

$$H = \begin{bmatrix} 0 & 0 & 0.375 & -0.250 & -0.250 \\ 0 & 0 & 1.125 & -0.500 & -0.500 \\ 0.5 & -1 & 2.250 & -0.500 & -0.500 \\ 0.5 & 0 & 2.625 & 0 & 0 \\ 0.5 & 1 & 2.250 & 0.500 & 0.500 \\ 0 & 0 & 1.125 & 0.500 & 0.500 \\ 0 & 0 & 0.375 & 0.250 & 0.250 \end{bmatrix}$$

In this little example the regression matrix only consists of values with an imaginary part equal to zero, but in general this is not the case.

The problem to be solved is thus $Y = H\theta$.

$$\begin{bmatrix} 0.375 \\ 1.125 \\ 2.250 \\ 2.625 \\ 2.250 \\ 1.125 \\ 0.375 \end{bmatrix} = \begin{bmatrix} 0 & 0 & 0.375 & -0.250 & -0.250 \\ 0 & 0 & 1.125 & -0.500 & -0.500 \\ 0.5 & -1 & 2.250 & -0.500 & -0.500 \\ 0.5 & 0 & 2.625 & 0 & 0 \\ 0.5 & 1 & 2.250 & 0.500 & 0.500 \\ 0 & 0 & 1.125 & 0.500 & 0.500 \\ 0 & 0 & 0.375 & 0.250 & 0.250 \end{bmatrix} \begin{bmatrix} H_1(f_0) \\ \dfrac{dH_1}{d+} \\ H_3(f_0, f_0, -f_0) \\ \dfrac{\partial H_3}{\partial +} \\ \dfrac{\partial H_3}{\partial -} \end{bmatrix}$$

Now, the algorithm can optionally remove rows (i.e. frequency bins) that the user does not want to take into account, the columns can be normalised, a row specific-weighting can be applied, ... before solving the problem. In this very simple example, the solution is

$$\theta = \begin{bmatrix} 0 & 0 & 1 & 0 & 0 \end{bmatrix}^{\mathsf{T}}$$

This indicates that the proposed model can correctly describe static nonlinear systems. E.g. adapting the system to behave as $y(t) = u(t) + u^3(t)$, results in

$$\theta = \begin{bmatrix} 1 & 0 & 1 & 0 & 0 \end{bmatrix}^{\mathsf{T}}$$

In general, the system to be modelled has dynamic behaviour, and thus more (if not all) model parameters are nonzero.

To illustrate the strength of the method according to this invention, in particular of the model applied therein, some simulation results are now presented. A system of fifth-order nonlinearity is simulated. The normalised mean squared error (NMSE), calculated as

$$\mathrm{NMSE} = \frac{1}{L} \frac{\sum_{i=1}^{L} \left| Y(i) - \hat{Y}(i) \right|^2}{\sum_{i=1}^{L} |Y(i)|^2}$$

between the estimated output $\hat{Y}$ and the system's output $Y$, both of length $L$, is calculated for the model presented in this description (indicated by *invention* in the graphs), as well as the two commonly used state-of-the-art memory polynomials. Those skilled in the art are certainly familiar with the orthogonal memory polynomials (OMP) and the generalised variant (GMP). For completeness their expressions are repeated here:

$$y_{\mathrm{OMP}}(n) = \sum_{m=0}^{N_{\mathrm{taps}}} \sum_{k=1}^{K} a_{mk} \cdot \psi_k \big( u(n-m) \big)$$

where

$$\psi_{k'}(x) = \sum_{l=1}^{k'} (-1)^{l+k'} \cdot \frac{(k'+l)!}{(l-1)!\,(l+1)!\,(k'-l)!} x |x|^{l-1}$$

and

$$y_{\mathrm{GMP}}(n) = \sum_{m=0}^{N_{\mathrm{taps}}} \sum_{k=1}^{K} a_{mk} \cdot u(n-m) \cdot |u(n-m)|^{k-1}$$

$$+ \sum_{m=0}^{N_{\mathrm{taps}}^{\mathrm{lag}}} \sum_{k=2}^{K_{\mathrm{lag}}} \sum_{p=1}^{P} b_{mkp} \cdot u(n-m) \cdot |u(n-m-p)|^{k-1}$$

$$+ \sum_{m=0}^{N_{\mathrm{taps}}^{\mathrm{lead}}} \sum_{k=2}^{K_{\mathrm{lead}}} \sum_{q=1}^{Q} c_{mkq} \cdot u(n-m) \cdot |u(n-m+q)|^{k-1}$$

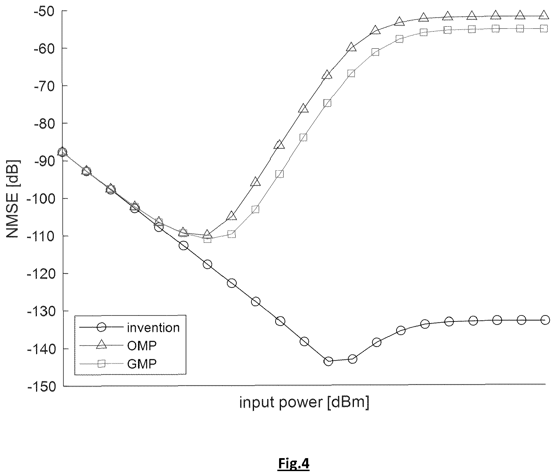

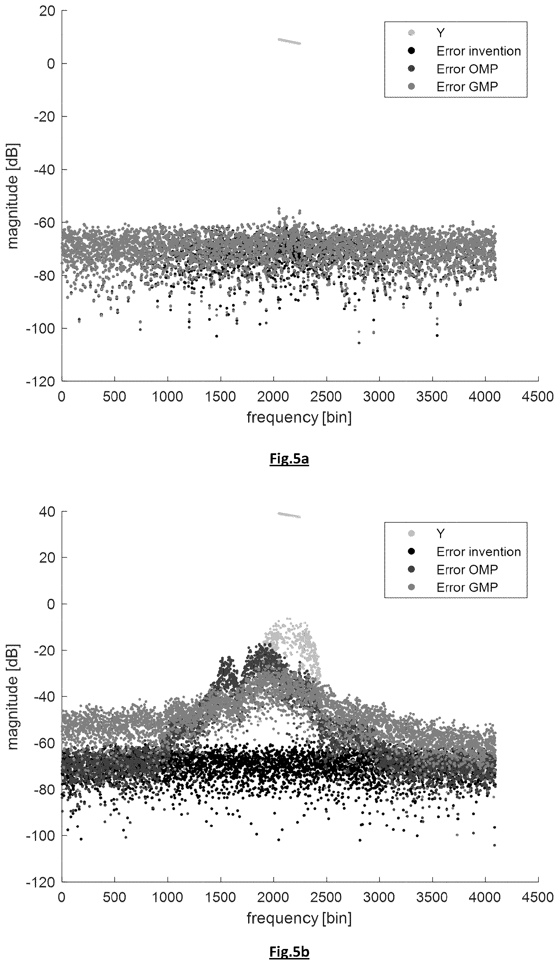

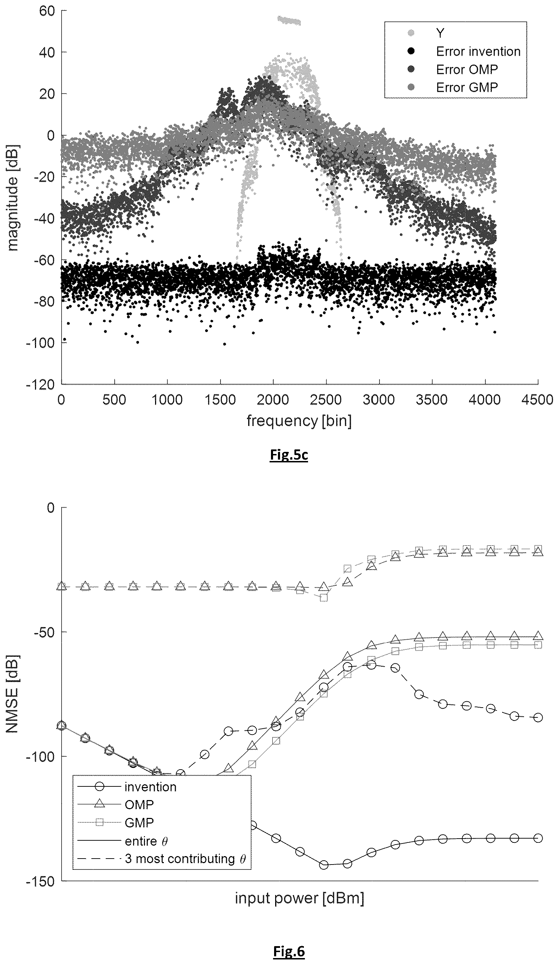

All models consider a fifth order nonlinearity ($K = 5$); the model of present invention uses a Taylor expansion of degree 3, the memory polynomials use $N_{\mathrm{taps}} = 5$, and additionally for the GMP model, $N_{\mathrm{taps}}^{\mathrm{lag}} = N_{\mathrm{taps}}^{\mathrm{lead}} = P = Q = 1$ and $K_{\mathrm{lag}} = K_{\mathrm{lead}} = 2$. Therefore, $n_{\theta_{\mathrm{invention}}} = 34$, $n_{\theta_{\mathrm{OMP}}} = 30$, $n_{\theta_{\mathrm{GMP}}} = 34$. I.e. all models have a comparable number of model parameters. The input signal has a length of $L = 16384$ samples and excites 134 bins. The proposed model thus has a regression matrix of size 996 × 34, whereas the OMP and GMP approach respectively result in regression matrices of size 16384 × 30 and 16384 × 34. The graph of the NMSE (Fig.4), clearly shows that for higher input powers, the memory polynomials have considerable difficulty to correctly model the system, whereas the developed approach has an excellent model fit for all input powers. In Fig.5a, where the input power is fairly low, the behaviour of the system is mostly linear (only the frequencies excited by the input signal are excited in the output spectrum) and all models have the lowest attainable error: it is equal to the noise floor. In Fig.5b, the input power is increased, and nonlinear distortion appears (notice the 'shoulders' appearing in $Y$ from approximately 1800 to 2000 and 2300 to 2500). The memory polynomials can adequately model the linear part of the response and some of the third-order distortion. The proposed model, on the other hand, still has an error equal to the noise floor. In Fig.5c, the input power is increased even further. The model adopted in this invention starts showing some small discrepancy between the modelled output and the simulated one. The memory polynomials perform similar as in the aforementioned input power, i.e. they completely fail at modelling the fifth order nonlinearity (their error is higher than the fifth order distortions at approximately bin 1600 to 1800 and 2500 to 2700) and can only model partially the third order nonlinearity. With the same number of model parameters, the proposed model clearly outperforms the current state of the art. The proposed model again has a very low error: it is almost everywhere equal to the noise floor, except in the range 2000 to 2400 where it is slightly higher than the noise floor (but still remarkably lower than the memory polynomials). In fact, by only retaining the 3 most contributing model parameters of $\theta$, the proposed model has a comparable performance as the memory polynomials with one order of magnitude more parameters (Fig.6). Note that the memory polynomials completely fail to adequately model the output with their three most contributing model parameters of $\theta$.

The algorithm as described above can be applied as a part of a method for predistortion of a communication system. Most communication systems incorporate a power amplifier that boosts the transmit power to obtain a reliable communication. To obtain a high power efficiency, the power amplifier is generally pushed into a nonlinear operating regime. While this nonlinear regime is beneficial for the power efficiency, it unfortunately introduces nonlinear distortion that degrades the signal quality. The goal of predistortion is to compensate the nonlinear distortion generated by the communication system and ensure linear amplification of the transmitted signal. As the name suggests, predistortion techniques accomplish this goal by implementing a (digital) predistorter. This predistorter modifies the input signal of the communication system in such a way that the generated nonlinear distortion is cancelled.

Finding a performant predistorter that is easily implementable in digital hardware is not an easy task as it requires an accurate description of the nonlinear dynamic behaviour of the communication system. This description is not readily available and requires the use of an approximative model that can capture the nonlinear dynamic effects inhibited by the system. As this model is only an approximation of the actual behaviour of the system, often an iterative approach is used that aims to converge to the optimal predistorter for a given applied input signal. The goal of each iteration is to lower the nonlinear distortion generated by the power amplifier by measuring the predistorted input and output signal of the amplifier, and using these measured signals to estimate a model and subsequently update the predistorter. When a sufficiently low level of measured nonlinear distortion is obtained, the iterative algorithm is terminated and the optimal predistorter is obtained. It is important that the model can accurately capture nonlinear effect. The more accurate the model is, the fewer iterations are needed and the faster an optimal predistorter is obtained. Furthermore, a computationally efficient algorithm should be available to perform the model estimation. As nonlinear behaviour is signal-dependent, the predistorter must be adjusted over time to track signal-induced changes in the nonlinear behaviour and consequently maintain low nonlinear distortion levels.

The algorithm proposed in this invention can be used to accurately model the communication system's behaviour, with a low number of parameters, while keeping the computational complexity low. Embedding the proposed algorithm in (digital) predistortion techniques results in a faster convergence rate and performance due to an improved accuracy-parsimony trade-off.

The algorithm as described above can furthermore be applied as part of a method for nonlinear control synthesis. Nonlinear systems arise naturally in several engineering disciplines, including biological and mechanical systems, aerospace, automotive, and chemical control, and many others. In most cases, a linear controller is sufficient to control the dynamic behaviour. However, if one wants to obtain a high control performance, compensation of the nonlinear effects is necessary. The proposed algorithm can be used during the synthesis of nonlinear controllers where its purpose is to accurately describe the nonlinear effects induced by the system in a time-efficient manner.

The invention also discloses a computer program product containing instructions, which, when carried out on a programmable device, perform the method as described in this invention.

The method proposed in this invention is advantageously performed on a programmable device equipped with processing means adapted to perform the various steps of the method.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. Method for determining a representation of a nonlinear system, comprising :

   - receiving a bandpass input signal applied to said nonlinear system and a measured output signal of said nonlinear system obtained in response to said input signal,
   - selecting a nonlinearity order expected to be present in said nonlinear system, said nonlinearity order determining a maximal order of a kernel in a Volterra series representation of said nonlinear system,
   - extracting from the spectrum of said input signal a set of excited frequency bins and a central frequency bin,
   - calculating a set of excited frequency bins present in said output signal from said nonlinearity order and said set of excited frequency bins in the spectrum of said input signal,
   - selecting a highest order of a Taylor series approximation for each kernel in said Volterra series representation, said Taylor series approximation comprising coefficients, depending on said set of excited frequencies in said input signal and on said central frequency bin, multiplied with derivatives forming model parameters of said nonlinear system,
   - determining, for each model parameter, said coefficients via transformations between time and frequency domain,
   - retrieving values for said model parameters by solving a least-squares problem, thereby exploiting the spectrum of said measured output signal and said coefficients,
   - determining the Volterra series representation of said nonlinear system using said model parameters in said Taylor series approximation for the different kernels.

2. Method for determining a representation as in claim 1, further comprising :

   - extending said spectrum of said input signal so that harmonics can be accommodated occurring due to a nonlinearity of up to said maximal order,
   - constructing a first masked version and a second masked version of said extended spectrum, said first masked version containing only spectral values corresponding to positive excited frequency bins of said extended spectrum and said second masked version containing only spectral values corresponding to negative excited frequency bins of said extended spectrum,
   - constructing a first difference vector containing the difference between said central frequency bin and said positive excited frequency bins and a second difference vector containing the difference between said central frequency bin and said negative excited frequency bins.

3. Method for determining a representation as in claim 2, wherein said steps of extending said spectrum of said input signal, constructing said masked first and second versions and said first and second difference vectors are performed separately for each order k lower than said maximal order.

4. Method for determining a representation as in any of the previous claims, wherein said step of retrieving values comprises filling a regression matrix.

5. Method for determining a representation as in claim 5, wherein said regression matrix has dimensions determined by the size of said set of excited frequency bins present in said output signal and the number of model parameters to be estimated.

6. Method for determining a representation as in claims 4 or 5, comprising a step of normalizing the columns of said regression matrix.

7. Method for determining a representation as in any of claims 4 to 6, where in said regression matrix a row-specific weighting is performed as a function of the variance of the spectrum of said measured output signal.

8. Method for determining a representation as in any of the previous claims, wherein in said step of determining said Taylor series approximation analytically exact expressions are calculated for said derivatives.

9. Method for determining a representation as in any of claims 1 to 7, wherein the step of determining said Taylor series approximation for each kernel is performed under the assumption that derivatives of a given order in said Taylor series approximation for a same kernel are identical.

10. Method for determining a representation as in any of the previous claims, comprising a step of providing a list of frequency bins in the spectrum of said measured output signal that are not to be considered.

11. Method for determining a representation as in any of the previous claims, comprising a step of determining an estimation of the signal spectrum output by said nonlinear system when said bandpass input signal is applied.

12. Method for determining a representation as in any of the previous claims, wherein said nonlinearity order is lowered when in the spectrum of said measured output signal no nonlinear contributions are found corresponding to said nonlinearity order.

13. Method for determining a representation as in any of the previous claims, comprising determining for each order of nonlinearity up to said maximal order a set of exponents for said coefficients.

14. Method for determining a representation as in any of the previous claims, wherein said nonlinear system is a communication system.

**Fig.1**

**Fig.2**

Fig.3

**Fig.4**

**Fig.5a**

**Fig.5b**

**Fig.5c**

**Fig.6**

Europäisches
Patentamt

European
Patent Office

Office européen
des brevets

# EUROPEAN SEARCH REPORT

Application Number

**EP 23 15 1990**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAM S.W. ET AL: "Application of higher order spectral analysis to cubically nonlinear system identification", IEEE TRANSACTIONS ON SIGNAL PROCESSING, vol. 42, no. 7, 1 July 1994 (1994-07-01), pages 1746-1765, XP093052619, DOI: 10.1109/78.298282 * the whole document * * abstract * * figure 1 * * equations (1), (67), (76), (91) * * page 1748, column 1, paragraph 1 * * page 1757, column 1, paragraph 1 * | 1-14 | INV. G06F30/20 G05B17/00 ADD. G06F111/10 |
| X | CHENG C M ET AL: "Volterra-series-based nonlinear system modeling and its engineering applications: A state-of-the-art review", MECHANICAL SYSTEMS AND SIGNAL PROCESSING, vol. 87, 5 November 2016 (2016-11-05), pages 340-364, XP029916249, DOI: 10.1016/J.YMSSP.2016.10.029 * the whole document * * abstract * * section 2.2.1 * * section 2.6.2 * | 1-14 | |
| | | | TECHNICAL FIELDS SEARCHED (IPC) |
| | | | G06F G05B |

The present search report has been drawn up for all claims

| Place of search | Date of completion of the search | Examiner |
|---|---|---|
| Munich | 7 June 2023 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)